# FASCICULE DE BREVET EUROPEEN

(11) **EP 0 470 891 B1**
(45) Date de publication et mention de la délivrance du brevet: **15.09.1993**
(21) Numéro de dépôt: 91402141.5
(22) Date de dépôt: 30.07.1991
(51) Int. Cl.: A23B 7/10, A23L 1/221, A23B 7/04, B65B 25/02

(54) **Procédé et installation de préparation de végétaux surgelés**
Verfahren und Einrichtung zur Bereitung von gefrorenem Gewächs
Process and apparatus for preparation of deep frozen vegetables

(30) Priorité: 08.08.1990 FR 9010152
(43) Date de publication de la demande: 12.02.1992
(73) Titulaire: SOCIETE DE DEVELOPPEMENT DE L'INDUSTRIE, AGRO-ALIMENTAIRE ET DE PEPINIERE EUROPEEENE - SODIAPE, F-77167 Bagneaux sur Loing (FR)
(72) Inventeur: Darbonne, Luc, F-91490 Milly la Forêt (FR)
(74) Mandataire: Derambure, Christian

(56) Documents cités:
- EP-A- 0 145 544
- BE-A- 1 001 589
- FR-A- 2 352 589
- FR-A- 2 561 076

## Description

L'invention concerne un procédé et une installation de préparation de végétaux et plus spécifiquement d'herbes aromatiques surgelées ou équivalent. Elle concerne aussi les végétaux, notamment les herbes aromatiques surgelées ou équivalent obtenues par leur mise en oeuvre.

On connaît déjà des installations pour la préparation et le conditionnement de légumes et de végétaux frais. Selon le document FR-A-2 561 676, une telle installation comprend les étapes suivantes : séparation - éclatement ; triages ; lavage ; rinçage ; essorage ; séchage ; irradiation, traitement thermique, huilage ; essorage ; pesage ; conditionnement. Ce document ne décrit pas, n'évoque pas une surgélation éventuelle des végétaux.

On connaît également des procédés et installations de préparation de légumes surgelés, comportant classiquement, sur une ligne d'amont en aval, une étape ou un poste de lavage, parage, épluchage, coupe, traitement puis soit mise en boîte puis surgélation (celle-ci étant en bloc) soit surgélation individuelle rapide en lit fluidisé puis conditionnement.

On peut se référer, par exemple, aux documents : BE-A-809 014 selon lequel on met en oeuvre de la neige carbonique ; FR-A-2 512 533 selon lequel le refroidissement en vrac est réalisé dans un tambour rotatif subdivisé longitudinalement avec des perforations sur toute la paroi latérale cylindrique ; FR-A-2 316 559 selon lequel les moyens de refroidissement sont doubles : par air pulsé et par liquide cryogénique ; US-A-3 592 666 selon lequel, les légumes sont préalablement chauffés à 80°C, 100°C et ensuite surgelés immédiatement après ; FR-A-2 171 862 selon lequel les fruits et légumes considérés, à l'état brut de cueillette, sont soumis à l'action de l'anhydrite sulfureux ; JP-A-63 294738 selon lequel les légumes sont coupés en contact avec de l'eau, lavés et immédiatement après surgelés.

Selon le document FR-A-2 400 847, un procédé de production de tomates surgelées et pelées comprend la succession d'étapes suivantes : surgélation ; nettoyage à brosses, à sec ; pelage par abrasion ; surgélation complémentaire. Une installation pour la mise en oeuvre de ce procédé comporte un dispositif de surgélation ; une bande de transport ; une machine à brosses travaillant à sec ; une deuxième bande de transport ; une machine à peler par abrasion ; une bande de sélection ; et un tunnel de surgélation complémentaire. Ce procédé et cette machine, spécifiquement destinés à des tomates, prévoient donc, selon la caractéristique essentielle deux surgélations séparées par un nettoyage et un pelage.

On connaît aussi la préparation d'herbes aromatiques ou équivalent surgelées (aneth, basilic, céleri, cerfeuil, coriandre, cresson, épinard, estragon, livèche, marjolaine, menthe, oseille, persil, romarin, sarriette, thym, sauge, origan, lavande, ciboulette, ail, échalote, oignon) selon des procédés et au moyen d'installations telles que celles précédemment mentionnées, ou équivalente. On peut se référer ainsi au document BE-A-1 001 589 qui divulgue la congélation en bloc de végétaux avant de leur faire subir un traitement mécanique approprié (broyage, laminage, concassage, ...), cette congélation permet la conservation des qualités organoleptiques des végétaux mais ne permet pas un conditionnement sélectif des parties consommables. Au contraire, selon ce document, l'ensemble de la plante traitée est réduit en poudre.

Cependant, dans le cas d'herbes aromatiques ou équivalent, les techniques antérieures posent certains problèmes ou ont certaines limites. Ainsi, il est souvent difficile, voire impossible de séparer les feuilles des tiges du végétal à l'état frais. La coupe du végétal crée une blessure ; le végétal peut être écrasé ou ses cellules, alors ouvertes, se vider. Ces cellules ouvertes sont oxydées ce qui affecte les qualités organoleptiques et notamment l'arôme. Les opérations de parage, triage, épluchage, coupe requièrent une main d'oeuvre importante avec les problèmes connus d'efficacité, de sécurité, bactériologiques, de prix de revient, etc...

L'invention a donc pour objet un procédé et une installation de préparation des végétaux (notamment de plantes aromatiques) surgelés surmontant les problèmes ou limites mentionnés précédemment.

Une installation pour la préparation de végétaux surgelés spécialement adaptée à la préparation d' herbes ou plantes aromatiques comprend, d'amont en aval et à partir
- d'une alimentation en végétaux frais en vrac ;
- et d'une alimentation en emballages vides :

a) un dispositif de lavage des végétaux frais en sortie de l'alimentation en végétaux et un dispositif d'essorage des végétaux lavés ;
b) un dispositif de surgélation de type rapide individuelle ;
c) au moins un dispositif apte à appliquer aux végétaux se trouvant à l'état surgelé des contraintes mécaniques suffisantes pour permettre de les casser en plusieurs fractions notamment les feuilles et les tiges
d) au moins un dispositif de triage en sortie du précédent pour séparer les fractions homogènes les unes des autres, celles-ci se trouvant à l'état surgelé ;
e) un dispositif de conditionnement d'au moins une des fractions se trouvant à l'état surgelé, à savoir la fraction à utiliser, notamment les feuilles.
f) des moyens d'évacuation de la ou des fractions issues du dispositif de triage et destinées à ne pas être utilisées, à savoir les tiges.

Un procédé pour la préparation de végétaux surgelés spécialement adapté à la préparation d' herbes ou plantes aromatiques dans lequel on alimente des végétaux frais en vrac et des emballages vides, comprend les étapes successives consistant à :
a) laver les végétaux frais ;
b) essorer les végétaux lavés ;
c) surgeler de façon rapide et individuelle les végétaux lavés et essorés ;
d) maintenir les végétaux ainsi surgelés dans cet état ;
e) leur appliquer des contraintes mécaniques suffisantes pour permettre, d'être cassés en plusieurs fractions, notamment les feuilles et les tiges ;
f) les trier pour séparer les fractions homogènes les unes des autres ;
g) conditionner au moins une des fractions à l'état surgelé, à savoir les fractions à utiliser, notamment les feuilles ;
h) évacuer la ou les fractions triées et destinées à ne pas être utilisées, à savoir les tiges.

Selon d'autres caractéristiques, l'installation comporte également un dispositif de pasteurisation des végétaux lavés et grossièrement fractionnés, coupés, essorés, par chauffage puis refroidissement des végétaux ainsi pasteurisés jusqu'à une température de l'ordre de la température ambiante. Elle comporte également un dispositif de fractionnement grossier des végétaux lavés placé en aval du dispositif de lavage et en amont du dispositif de surgélation. Les dispositifs de lavage, de fractionnement grossier, de surgélation, aptes à appliquer des contraintes mécaniques de trituration, de triage, de conditionnement, de pasteurisation sont agencés pour fonctionner en continu. Les dispositifs aptes à appliquer des contraintes mécaniques, de triage, de conditionnement sont situés dans une enceinte thermique se trouvant à une température proche de la température de surgélation, telle qu'une chambre refroidie. L'installation comporte plusieurs paires d'au moins un dispositif apte à appliquer des contraintes mécaniques et d'au moins un dispositif de triage, placées en série d'amont en aval. Un dispositif apte à appliquer des contraintes mécaniques est un batteur, un broyeur, un concasseur. Un dispositif de triage fonctionne par tri granulométrique, densimétrique, pneumatique, calorimétrique, ou encore selon la forme même des fractions triées.

Selon un autre aspect, l'invention concerne un procédé de traitement de végétaux spécialement adapté au traitement d'herbes ou plantes aromatiques comprenant les étapes successives consistant à :
a) surgéler de façon rapide et individuelle les végétaux,
b) maintenir les végétaux ainsi surgelés dans cet état ;
c) leur appliquer des contraintes mécaniques suffisantes pour permettre, d'être cassés en plusieurs fractions, notamment les feuilles et les tiges.

La mise en oeuvre de l'invention offre de nombreux avantages : tout d'abord, elle permet de surmonter les problèmes ou limites précédemment mentionnés rencontrés dans l'état connu de la technique. De plus, les végétaux ne sont pas abîmés, meurtris, écrasés, souillés. Les pertes sont réduites au minimum. Le prix de revient est amélioré. Dans le cas de végétaux comprenant des tiges et des feuilles, seules ces dernières -consommables- sont conditionnées, les tiges étant rejetées. Il est également possible de réaliser des mélanges de plusieurs végétaux homogènes et cela sans décongélation. L'invention peut également être mise en oeuvre hors saison de récolte.

Ainsi que cela résulte de ce qui précède, l'invention concerne la trituration mécanique sous froid de végétaux. Les étapes du procédé peuvent être incluses ou non dans la ligne d'installation considérée en détail ici, en tant que mode possible de réalisation.

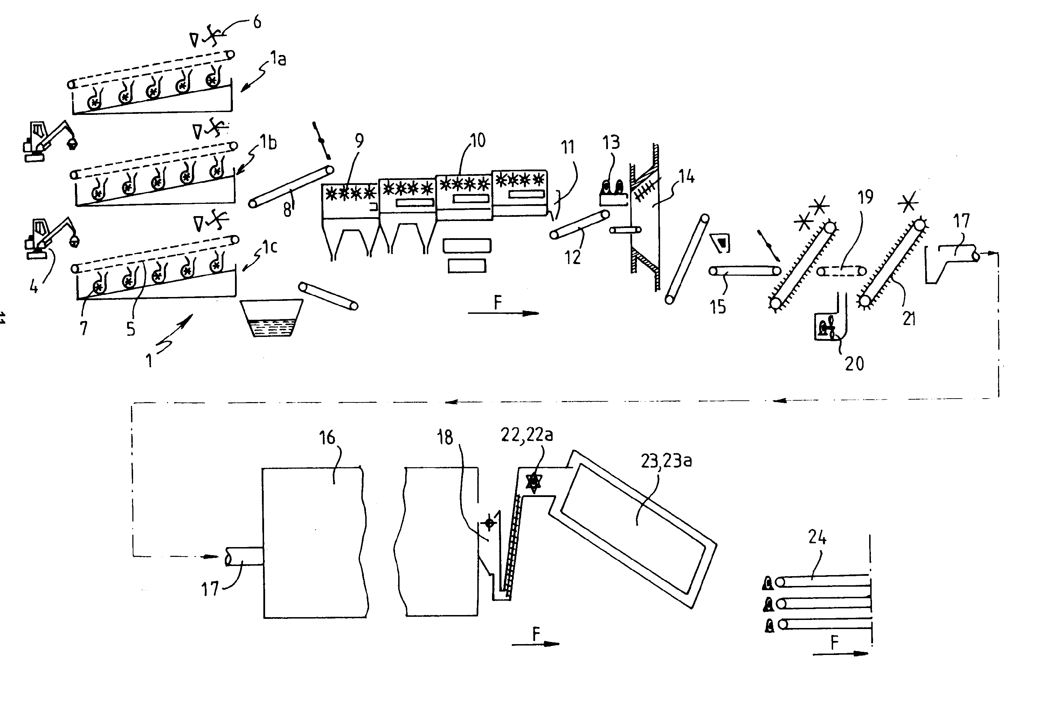

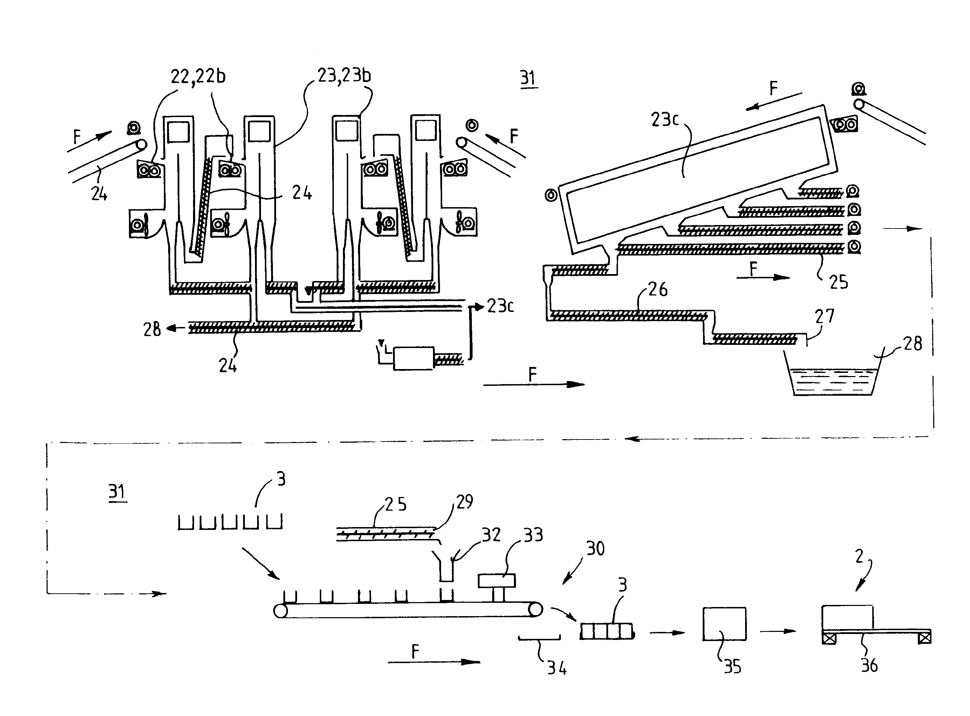

L'invention sera bien comprise grâce à un exemple purement indicatif de réalisation, en référence à la figure unique annexée, qui est un bloc-diagramme illustrant à la fois un procédé et une installation conforme à l'invention.

L'invention se rapporte à la préparation de végétaux surgelés et, plus particulièrement des végétaux destinés à la consommation humaine tels que des herbes ou plantes aromatiques ou équivalent. L'invention est typiquement applicable par exemple dans le cas où il faut surgeler seulement les feuilles de la plante considérée, tandis que ses tiges, non souhaitées, doivent être éliminées.

Le procédé et l'installation illustrés par la figure sont agencés pour fonctionner en continu et fonctionnent effectivement comme tel. Toutefois, on peut envisager également un agencement et un fonctionnement en discontinu, par lots.

Dans la réalisation considérée la ligne de préparation en continu, dont les postes ou dispositifs ou organes constitutifs sont destinés à la mise en oeuvre des étapes constitutives du procédé, s'étend entre une entrée amont 1 qui est une alimentation en végétaux frais en vrac et une sortie aval 2 où les végétaux préparés et surgelés sont conditionnés prêts à être stockés ou expédiés ou consommés. La ligne comprend également une alimentation 3 en emballages vides.

Dans le texte les mots "amont" et "aval" se réfèrent au sens de progression des végétaux sur et le long de la ligne (flèche F). Ces mots sont respectivement équivalents de "avant" ou "après" utilisés pour les étapes du procédé.

L'alimentation 1 peut comporter plusieurs ensembles distincts 1a, 1b, 1c permettant une plus grande flexibilité de fonctionnement. Chacun de ses ensembles peut comporter un engin de manutention 4, un tapis transporteur 5, une roue d'alimentation 6, des ventilateurs 7 placés sous le tapis 5, ajouré en conséquence.

En aval de l'alimentation 1, un tapis transporteur ou équivalent 8 amène les végétaux à l'entrée amont 9 d'un dispositif de lavage 10, lequel peut être en plusieurs sous-ensembles en série. Ce dispositif de lavage 10 assure l'étape dans laquelle les végétaux frais sont lavés.

En sortie aval 11 du dispositif de lavage 10 et donc en aval de ce dernier se trouve un tapis transporteur de reprise 12 qui entraîne les végétaux vers un dispositif 13 de fractionnement grossier des végétaux lavés. Ce dispositif 13 vise à éviter que les végétaux ultérieurement traités se présentent sous la forme de blocs compacts agglomérés. Ce dispositif 13 réalise donc le fractionnement de tels éventuels blocs volumineux en morceaux plus petits.

En sortie du dispositif 13, donc en aval de ce dernier se trouve un dispositif d'essorage 14 des végétaux préalablement lavés et fractionnés ou non.

Dans la réalisation considérée, le dispositif de fractionnement grossier 13 est placé juste en aval du dispositif de lavage 10 et juste en amont du dispositif d'essorage 14.

Selon une autre variante, les végétaux sont essorés avant que d'être fractionnés, les dispositifs étant placés, d'amont en aval dans l'ordre suivant : 10, 14, 13.

Le cas échéant, l'essorage ou le fractionnement est réalisé en plusieurs étapes, successives. Ces étapes peuvent être imbriquées, pour l'essorage et le fractionnement, par exemple sous forme de plusieurs paires chacune d'une étape d'essorage (ou fractionnement) et d'une étape de fractionnement (ou d'essorage).

Les dispositifs de fractionnement 13 et d'essorage 14 visent à réaliser, respectivement les étapes de fractionnement et d'essorage du procédé mis en oeuvre.

Dans la réalisation considérée, il est également prévu un dispositif répartiteur 15 situé en aval des dispositifs de lavage et d'essorage 10, 14, notamment juste en aval du dispositif d'essorage 14.

Ce dispositif répartiteur 15 est lui-même situé en amont d'un dispositif de surgélation 16.

Ce dispositif de surgélation 16, tel qu'un tunnel de surgélation permet d'amener progressivement de l'entrée amont 17 à la sortie aval 18 les végétaux, à coeur, à la température de surgélation souhaitée, par exemple de l'ordre de -18°C à -40°C. Préférentiellement cette étape de surgélation des végétaux lavés et essorés est de type rapide et individuelle (ou IQF), ce qui permet d'éviter la prise en masse des végétaux ainsi surgelés.

Dans la réalisation considérée, il est également prévu un dispositif de pasteurisation 19 des végétaux placé entre les dispositifs de lavage et essorage 10, 14 et le dispositif de surgélation 16. Ce dispositif de pasteurisation 19 peut comprendre des moyens 20 assurant un chauffage des végétaux, situés vers l'amont, suivi, vers l'aval, d'un dispositif de refroidissement des végétaux 21 ainsi préalablement chauffés et pasteurisés jusqu'à une température de l'ordre de celle ambiante, à partir de laquelle les végétaux sont surgelés.

Dans la réalisation considérée, les végétaux sont, en aval du dispositif de pasteurisation 19, protégés pour éviter toute souillure ou contamination.

En aval du dispositif de surgélation 16 se trouvent d'une part au moins un dispositif 22 apte à appliquer aux végétaux se trouvant alors à l'état surgelé et donc fragilisés des contraintes mécaniques suffisantes pour permettre de les casser en plusieurs fractions notamment les feuilles et les tiges et au moins un dispositif 23, en sortie du dispositif 22, pour séparer les fractions homogènes les unes des autres, celles-ci se trouvant à l'état surgelé.

Dans la réalisation considérée, il est prévu plusieurs dispositifs 22 et plusieurs dispositifs 23, qui, pour chacun d'eux sont placés en série d'amont en aval. Les dispositifs 22, 23 sont organisés en paires d'au moins un dispositif 22 et d'au moins un dispositif 23 et il est prévu plusieurs paires 22, 23 en série d'amont en aval. Cette disposition constructive vise à assurer un fractionnement et un tri optimaux.

Le dispositif 22 est dans la réalisation considérée, un batteur, un broyeur, un concasseur, un triturateur, une meule.

Le dispositif 23, quant à lui, fonctionne par tri granulométrique, densimétrique, pneumatique, calorimétrique, ou encore selon la forme même des fractions triées.

Les différents dispositifs 22, 23 ou paires de dispositifs 22, 23 sont reliés par des tapis transporteurs 24, tapis, vis, chaines.

Dans la réalisation considérée, il est prévu d'amont en aval et à partir de la sortie aval 18 du dispositif de surgélation 16 :
- un dispositif de battage 22a, d'un type généralement semblable à celui mis en oeuvre dans les moissonneuses-batteuses ;
- un répartiteur à grilles 23a ;
- deux paires de broyeurs 22b ;
- deux cyclones de séparation penumatique 23 b;
- un crible final 23c.

En sortie du dernier dispositif de triage, le plus en aval, en l'occurrence le crible 23c, se trouvent au moins deux convoyeurs à savoir au moins un convoyeur 25 pour au moins une fraction consommable et au moins un convoyeur 26 pour les déchets séparés de la fraction consommable et quine sont pas vendus au consommateur de cette fraction consommable.

Le cas échéant, il peut être prévu plusieurs convoyeurs 25 et/ou 26 correspondant à plusieurs granulométries ou qualités.

Le convoyeur 26 déverse, en sortie aval 27, les déchets vers une évacuation 28 qui peut récupérer également les déchets provenant des autres dispositifs de triage placés en amont 23a, 23b.

En sortie aval 29 d'un convoyeur 25, ou de chacun des convoyeurs 25, d'une ou des fraction(s) consommable(s) se trouve au moins un ou plusieurs dispositifs de conditionnement 30.

Le dispositif de conditionnement 30, comme les dispositifs 22, 23, travaillent sur des végétaux à l'état surgelé. A cet effet, le procédé comporte une étape consistant à maintenir les végétaux dans cet état pendant qu'on leur applique des contraintes mécaniques, qu'on les trie et qu'on les conditionne. Et l'installation comporte un dispositif ou des moyens correspondants.

Dans la réalisation considérée, les dispositifs aptes à appliquer des contraintes mécaniques 22, de triage 23, de conditionnement 30 sont situés dans une enceinte thermique 31 se trouvant à une température proche de la température de surgélation, telle qu'une chambre refroidie. En conséquence, les dispositifs 22, 23, 30 doivent être d'un type convenable pour fonctionner aux températures considérées.

Le dispositif de conditionnement 30 comporte l'alimentation 3 en emballages tels que des petites boîtes ou étuis en carton alors vides et ouverts ; des moyens de dosage 32 des végétaux surgelés de manière qu'une quantité connue prédéterminée de vegétaux, à l'état surgelé, soit transférée dans les boîtes ou étuis ; des moyens de fermeture, marquage, étiquetage 33 des boîtes ou étuis. Le dispositif 30 peut comporter, également des moyens d'emballage mettant en oeuvre des caisses 35 elles-mêmes regroupées pour former une charge palettisée 36.

Il va de soi que les moyens décrits peuvent être remplacés par des moyens équivalents. Tel est en particulier le cas des tapis convoyeurs qui peuvent être remplacés par des vis sans fin, ou équivalent.

En sortie 2, les végétaux se présentent sous forme conditionnée et sont emballés, à l'état surgelé, seule la fraction intéressante (en l'occurrence celle consommable) ayant été conditionnée et emballée.

## Revendications

1. Installation pour la préparation de végétaux surgelés du type dans lequel les végétaux sont d'abord surgélés puis cassés à l'état surgelé, caractérisé en ce qu'elle comprend d'amont en aval et à partir
- d'une alimentation (1) en végétaux frais en vrac ;
- et d'une alimentation (3) en emballages vides :
a) un dispositif de lavage (10) des végétaux frais en sortie de l'alimentation en végétaux et un dispositif d'essorage (14) des végétaux lavés ;
b) un dispositif de surgélation (16) de type rapide et individuelle ;
c) au moins un dispositif (22) apte à appliquer aux végétaux se trouvant à l'état surgelé des contraintes mécaniques suffisantes pour permettre de les casser en plusieurs fractions notamment les feuilles et les tiges ;
d) au moins un dispositif de triage (23) en sortie du précédent (22) pour séparer les fractions homogènes les unes des autres, celles-ci se trouvant à l'état surgelé ;
e) un dispositif de conditionnement (30) d'au moins une des fractions se trouvant à l'état surgelé, à savoir la fraction à utiliser notamment les feuilles ;
f) des moyens d'évacuation (28) de la ou des fractions issues du dispositif de triage et destinées à ne pas être utilisées, à savoir les tiges ;
cette installation étant spécialement adaptée à la préparation d'herbes ou plantes aromatiques.

2. Installation selon la revendication 1, caractérisée en ce qu'elle comporte, également un dispositif de pasteurisation (19) des végétaux lavés, coupés, essorés placé entre les dispositifs de lavage et essorage (10, 14) et le dispositif de surgélation (16).

3. Installation selon la revendication 1, caractérisée en ce qu'elle comporte également un dispositif de pasteurisation (19) des végétaux lavés, coupés, essorés, par chauffage (20) suivi d'un dispositif de refroidissement (21) des végétaux ainsi pasteurisés jusqu'à une température de l'ordre de la température ambiante.

4. Installation selon la revendication 1, caractérisée en ce qu'elle comporte également un dispositif (13) de fractionnement grossier des végétaux lavés placé en aval du dispositif de lavage (10) et en amont du dispositif de surgélation (16).

5. Installation selon l'une quelconque des revendications 1 à 4, caractérisée en ce que les dispositifs de lavage (10), de fractionnement grossier (13), de surgélation (16), aptes à appliquer des contraintes mécaniques (22), de triage (23), de conditionnement (30), de pasteurisation (19), d'évacuation (28) sont agencés pour fonctionner en continu.

6. Installation selon la revendication 1, caractérisée en ce que les dispositifs aptes à appliquer des contraintes mécaniques de trituration (22), de triage (23), de conditionnement (30) sont situés dans une enceinte thermique (31) se trouvant à une température proche de la température de surgélation, telle qu'une chambre refroidie.

7. Installation selon la revendication 1, caractérisée en ce que le dispositif de surgélation (16) de l'enceinte thermique (31) se trouve à une température de l'ordre de -18°C à -40°C.

8. Installation selon la revendication 1, caractérisée en ce qu'elle comporte, en outre, un dispositif répartiteur (15) situé en aval du dispositif de lavage (10) et du dispositif d'essorage (14) et en amont du dispositif de surgélation (16).

9. Installation selon la revendication 1, caractérisée en ce que le dispositif de fractionnement grossier (13) est placé en aval du dispositif de lavage (10) et en amont du dispositif d'essorage (14).

10. Installation selon la revendication 1, caractérisée en ce qu'elle comporte plusieurs dispositifs (22) aptes à appliquer des contraintes mécaniques, placés en série d'amont en aval.

11. Installation selon la revendication 1, caractérisé en ce qu'elle comporte plusieurs dispositifs (23) de triage, placés en série d'amont en aval.

12. Installation selon la revendication 1, caractérisée en ce qu'elle comporte plusieurs paires d'au moins un dispositif (22) apte à appliquer des contraintes mécaniques et d'au moins un dispositif (23) de triage, placées en série d'amont en aval.

13. Installation selon la revendication 1, caractérisée en ce qu'un dispositif (22) apte à appliquer des contraintes mécaniques est un batteur, un broyeur, un concasseur, un triturateur, une meule.

14. Installation selon la revendication 1, caractérisée en ce qu'un dispositif (23) de triage fonctionne par tri granulométrique, densimétrique, pneumatique, calorimétrique, ou selon la forme même des fractions triées.

15. Installation selon la revendication 1, caractérisée en ce que le dispositif de triage (23) comprend, en aval, au moins une sortie (25) pour une fraction à conditionner et au moins une sortie (26) pour des déchets non conditionnés.

16. Procédé pour la préparation de végétaux surgelés du type dans lequel les végétaux sont d'abord surgelés puis cassés à l'état surgelé, caractérisé en ce qu'il comprend, à partir d'une alimentation en végétaux frais en vrac et d'une alimentation en emballages vides, les étapes successives consistant à :
a) laver les végétaux frais ;
b) essorer les végétaux lavés ;
c) surgeler de façon rapide et individuelle les végétaux lavés et essorés ;
d) maintenir les végétaux ainsi surgelés dans cet état ;
e) leur appliquer des contraintes mécaniques suffisantes pour permettre d'être cassés en plusieurs fractions notamment les feuilles et les tiges ;
f) les trier pour séparer les fractions homogènes les unes des autres ;
g) conditionner au moins une des fractions à l'état surgelé, à savoir les fractions à utiliser notamment les feuilles ;
h) évacuer la ou les fractions triées et destinées à ne pas être utilisées, à savoir les tiges ;
ce procédé étant spécialement adapté à la préparation d'herbes ou plantes aromatiques.

17. Procédé selon la revendication 16, caractérisé en ce qu'on réalise une surgélation rapide individuelle de l'ordre de -18°C à -40°C.

18. Procédé selon la revendication 16, caractérisé en ce qu'on applique des contraintes mécaniques par battage, broyage, concassage ou équivalent.

19. Procédé selon la revendication 16, caractérisé en ce qu'on réalise un tri granulométrique, densimétrique, pneumatique, calorimétrique, ou selon la forme même des fractions triées.

20. Procédé selon la revendication 16, caractérisé en ce qu'on travaille en continu.

21. Procédé selon la revendication 16, caractérisé en ce qu'on travaille en discontinu, par lots.

22. Procédé selon la revendication 16, caractérisé en ce qu'on réalise l'application des contraintes mécaniques et le tri en plusieurs étapes ou paires d'étapes.

23. Procédé de traitement de végétaux du type dans lequel les végétaux sont d'abord surgelés puis cassés à l'état surgelé, caractérisé en ce qu'il comprend les étapes successives consistant à :
a) surgeler de façon rapide et individuelle les végétaux ;
b) maintenir les végétaux ainsi surgelés et dans cet état ;
c) leur appliquer des contraintes mécaniques suffisantes pour permettre d'être cassés en plusieurs fractions, notamment les feuilles et les tiges ;
ce procédé étant spécialement adapté au traitement d'herbes ou plantes aromatiques.

## Patentansprüche

1. Einrichtung zur Vorbereitung von tiefgefrorenen Pflanzen von der Art, bei die Pflanzen zuerst tiefgefroren und danach in tiefgefrorenem Zustand zerkleinert werden, dadurch gekennzeichnet, daß sie vor, hinter und von
- einer Zuführung (1) für lose, frische Pflanzen,
- einer Zuführung für leere Verpackungen an aus folgenden Teilen besteht:
a) einer Waschvorrichtung (10) zum Waschen der frischen Pflanzen am Austritt der Zuführung für Pflanzen sowie einer Vorrichtung zum Trockenschleudern (14) der gewaschenen Pflanzen,
b) einer Vorrichtung zum schnellen und individuellen Tiefgefrieren (16),
c) mindestens einer Vorrichtung (22), mit der auf die tiefgefrorenen Pflanzen eine ausreichende mechanische Beanspruchung ausgeübte wird, um diese - insbesondere deren Blätter und Stiele - in mehrere Bruchstücke zu zerkleinern,
d) mindestens einer Sortiervorrichtung (23) am Ausgang der vorgenannten Vorrichtung (22) zum Trennen der tiefgefrorenen Bruchstücke nach einheitlichen Größen,
e) einer Verpackungsvorrichtung (30) für mindestens einen Teil der tiefgefrorenen Bruchstücke, das heißt des verwertbaren Teils, insbesondere der Blätter,
f) Mittel zum Abtransportieren (28) des bzw. der aus der Sortiervorrichtung kommenden, nicht zur Verwertung bestimmten Bruchstücke, das heißt der Stiele,
wobei diese Einrichtung insbesondere zur Vorbereitung von aromatischen Kräutern und Pflanzen geeignet ist.

2. Vorrichtung nach Patentanspruch 1, dadurch gekennzeichnet, daß sie weiterhin eine Vorrichtung zum Pasteurisieren (19) der gewaschenen, zerkleinerten, geschleuderten Pflanzen besitzt, die sich zwischen der Wasch- und Schleudervorrichtung (10, 14) und der Tiefgefriervorrichtung (16) befindet.

3. Vorrichtung nach Patentanspruch 1, dadurch gekennzeichnet, daß sie weiterhin eine Vorrichtung zum Pasteurisieren (19) der gewaschenen, zerkleinerten, geschleuderten Pflanzen besitzt, die aus einer Vorrichtung zum Erhitzen (20) und einer darauffolgenden Vorrichtung zum Abkühlen (21) der so pasteurisierten Pflanzen auf Raumtemperatur besteht.

4. Vorrichtung nach Patentanspruch 1, dadurch gekennzeichnet, daß sie weiterhin eine Vorrichtung zum Grobzerkleinern der gewaschenen Pflanzen besitzt, die sich zwischen der Waschvorrichtung (10) und der Tiefgefriervorrichtung (16) befindet.

5. Vorrichtung nach einem der Patentansprüche 1 bis 4, dadurch gekennzeichnet, daß die Vorrichtungen zum Waschen (10), Grobzerkleinern (13) und Tiefgefrieren (16), zum Ausüben einer mechanischen Beanspruchung (22), Verpacken (30), Pasteurisieren (19) und Abtransportieren (28) so ausgelegt sind, daß sie durchgehend betrieben werden können.

6. Vorrichtung nach Patentanspruch 1, dadurch gekennzeichnet, daß die Vorrichtungen zum Ausüben einer mechanischen Beanspruchung (22), Sortieren (23) und Verpacken (30) sich in einem thermischen Raum (31) befinden, dessen Raumtemperatur um die Gefriertemperatur herum liegt wie z.B. ein Tiefkühlraum.

7. Vorrichtung nach Patentanspruch 1, dadurch gekennzeichnet, daß die Vorrichtung zum Tiefgefrieren (16) in dem thermischen Raum (31) eine Temperatur von -18°C bis -40°C besitzt.

8. Vorrichtung nach Patentanspruch 1, dadurch gekennzeichnet, daß sie weiterhin eine Verteilvorrichtung (15) besitzt, die sich hinter der Waschvorrichtung (10) und Schleudervorrichtung (14) und vor der Tiefgefriervorrichtung (16) befindet.

9. Vorrichtung nach Patentanspruch 1, dadurch gekennzeichnet, daß die Vorrichtung zum Grobzerkleinern (13) sich hinter der Waschvorrichtung (10) und vor der Schleudervorrichtung (14) und befindet.

10. Vorrichtung nach Patentanspruch 1, dadurch gekennzeichnet, daß sie mehrere Vorrichtungen zum Ausüben einer mechanischen Beanspruchung (22) besitzt, die von vorn nach hinten in Reihe aufgebaut sind.

11. Vorrichtung nach Patentanspruch 1, dadurch gekennzeichnet, daß sie mehrere Vorrichtungen zum Sortieren (23) besitzt, die von vorn nach hinten in Reihe aufgebaut sind.

12. Vorrichtung nach Patentanspruch 1, dadurch gekennzeichnet, daß sie mehrere Paare mit mindestens einer Vorrichtung zum Ausüben einer mechanischen Beanspruchung (22) und mindestens einer Vorrichtung zum Sortieren (23) besitzt, die von vorn nach hinten in Reihe aufgebaut sind.

13. Vorrichtung nach Patentanspruch 1, dadurch gekennzeichnet, daß eine Vorrichtung zum Ausüben einer mechanischen Beanspruchung (22) ein Schlag-, Mahl-, Zerkleiner- oder Schrotgerät ist.

14. Vorrichtung nach Patentanspruch 1, dadurch gekennzeichnet, daß eine Vorrichtung zum Sortieren (23) durch das nach Korngröße, Dichtemessung, durch Luftdruck, Kalorimetrie oder Messung der Größe der sortierten Bruchstücke erfolgt.

15. Vorrichtung nach Patentanspruch 1, dadurch gekennzeichnet, daß eine Vorrichtung zum Sortieren (23) mindestens einen Austritt (25) für einen zu verpackenden Teil und mindestens einen Austritt (26) für nicht zu verpackende befälle besitzt.

16. Verfahren zur Vorbereitung von tiefgefrorenen Pflanzen von der Art, bei die Pflanzen zuerst tiefgefroren und danach in tiefgefrorenem Zustand zerkleinert werden, dadurch gekennzeichnet, daß sie von einer Zuführung für lose, frische Pflanzen und einer Zuführung für leere Verpackungen an aus folgenden Arbeitsschritten besteht:
a) Waschen der frischen Pflanzen
b) Trockenschleudern der gewaschenen Pflanzen,
c) schnelles und individuelles Tiefgefrieren der gewaschenen und geschleuderten Pflanzen,
d) Beibehalten der Pflanzen in tiefgefrorenem Zustand
e) Ausüben einer ausreichende mechanische Beanspruchung auf die tiefgefrorenen Pflanzen, um diese - insbesondere deren Blätter und Stiele - in mehrere Bruchstücke zu zerkleinern,
f) Sortieren der tiefgefrorenen Bruchstücke nach einheitlichen Größen,
g) Verpacken mindestens eines Teils der tiefgefrorenen Bruchstücke, das heißt des verwertbaren Teils, insbesondere der Blätter,
h) Abtransportieren des bzw. der aus der Sortiervorrichtung kommenden, nicht zur Verwertung bestimmten Bruchstücke, das heißt der Stiele,
wobei dieses Verfahren insbesondere zur Vorbereitung von aromatischen Kräutern und Pflanzen geeignet ist.

17. Verfahren nach Patentanspruch 16, dadurch gekennzeichnet, daß ein schnelles und individuelles Tiefgefrieren bei -18°C bis -40°C erfolgt.

18. Verfahren nach Patentanspruch 16, dadurch gekennzeichnet, daß eine mechanische Beanspruchung durch Schlagen, Mahlen, Zerkleinern, Schroten u.ä. erfolgt.

19. Verfahren nach Patentanspruch 16, dadurch gekennzeichnet, daß ein Sortieren nach Korngröße, Dichtemessung, durch Luftdruck, Kalorimetrie oder Messung der Größe der sortierten Bruchstücke erfolgt.

20. Verfahren nach Patentanspruch 16, dadurch gekennzeichnet, daß die Bearbeitung durchgehend erfolgt.

21. Verfahren nach Patentanspruch 16, dadurch gekennzeichnet, daß die Bearbeitung nicht durchgehend, sondern losweise erfolgt.

22. Verfahren nach Patentanspruch 16, dadurch gekennzeichnet, daß die mechanische Beanspruchung und das Sortieren in mehreren Schritten oder Schrittpaaren erfolgt.

23. Verfahren zum Bearbeiten von Pflanzen von der Art, bei die Pflanzen zuerst tiefgefroren und danach in tiefgefrorenem Zustand zerkleinert werden, dadurch gekennzeichnet, daß es aus folgenden drei Arbeitsschritten besteht:
a) schnelles und individuelles Tiefgefrieren der Pflanzen
b) Beibehalten der Pflanzen in tiefgefrorenem Zustand
c) Ausüben einer ausreichende mechanische Beanspruchung auf die tiefgefrorenen Pflanzen, um diese - insbesondere deren Blätter und Stiele - in mehrere Bruchstücke zu zerkleinern,
wobei dieses Verfahren insbesondere zur Bearbeitung von aromatischen Kräutern und Pflanzen geeignet ist.

## Claims

1. An installation for the preparation of frozen vegetables, of the type in which the vegetables are first frozen and then broken in the frozen state, defined in that it comprises, from upstream in the downstream direction and starting from
- a feed (1) of fresh vegetables in bulk;
- and a feed (3) of empty packs:
a) a device (10) for washing the fresh vegetables at the exit of the vegetable feed and a device (14) for the spin-drying of the washed vegetables;
b) the freezing device (16) of the rapid individual type;
c) at least one device (22) suitable for exerting on the vegetables in the frozen state sufficient mechanical stresses to allow them to be broken into a plurality of fractions, especially the leaves and stalks;
d) at least one sorting device (23) located at the exit of the preceding device (22) in order to separate the uniform fractions from one another, these being in the frozen state;
e) a device (30) for packaging at least one of the fractions which are in the frozen state, namely the fraction to be used, particularly the leaves;
f) means (28) for disposing of the fraction or fractions coming from the sorting device and intended not to be used, namely the stalks;
this installation being specially designed for the preparation of aromatic herbs or plants.

2. The installation as claimed in claim 1, defined in that it also comprises a device (19) for the pasteurization of the washed, cut and dried vegetables, located between the washing and drying devices (10, 14) and the freezing device (16).

3. The installation as claimed in claim 1, defined in that it also comprises a device (19) for the pasteurization of the washed, cut and dried vegetables by heating (20), followed by a device (21) for cooling the vegetables thus pasteurized to a temperature of the order of the ambient temperature.

4. The installation as claimed in claim 1, defined in that it also comprises a device (13) for the coarse fractionation of the washed vegetables, located downstream of the washing device (10) and upstream of the freezing device (16).

5. The installation as claimed in any one of claims 1 to 4, wherein the washing (10), coarse fractionation (13) and freezing (16) devices suitable for exerting mechanical stresses (22), for sorting (23), for packaging (30), for pasteurization (19) and for disposal (28) are arranged to operate continuously.

6. The installation as claimed in claim 1, wherein the devices suitable for exerting mechanical comminuting stresses (22), sorting (23) and packaging (30) are located in a thermal containment (31) which is at a temperature in the neighborhood of the freezing temperature, such as a chilled room.

7. The installation as claimed in claim 1, wherein the freezing device (16) of the thermal containment (31) is at a temperature of the order of -18°C to -40°C.

8. The installation as claimed in claim 1, defined in that it comprises, furthermore, a distributor device (15) located downstream of the washing device (10) and of the drying device (14) and upstream of the freezing device (16).

9. The installation as claimed in claim 1, wherein the coarse fractionation device (13) is located downstream of the washing device (10) and upstream of the drying device (14).

10. The installation as claimed in claim 1, defined in that it comprises a plurality of devices (22) suitable for exerting mechanical stresses and arranged in series from upstream in the downstream direction.

11. The installation as claimed in claim 1, defined in that it comprises a plurality of sorting devices (23) arranged in series from upstream in the downstream direction.

12. The installation according to claim 1, defined in that it comprises a plurality of pairs of at least one device (22) suitable for exerting mechanical stresses and of at least one sorting device (23) which are arranged in series from upstream in the downstream direction.

13. The installation as claimed in claim 1, wherein a device (22) suitable for exerting mechanical stresses is a beater, a crusher, a pounder, a comminutor or a mill.

14. The installation as claimed in claim 1, wherein a sorting device (23) operates by granulometric, densimetric, pneumatic or calorimetric sorting or according to actual shape of the sorted fractions.

15. The installation as claimed in claim 1, wherein the sorting device (23) comprises downstream at least one exit (25) for a fraction to be packaged and at least one exit (26) for non-packaged scraps.

16. A process for the preparation of frozen vegetables, of the type in which the vegetables are first frozen and then broken in the frozen state, defined in that it comprises, starting from a feed of fresh vegetables in bulk and from a feed of empty packs, the successive steps involving:
a) washing the fresh vegetables;
b) spin-drying the washed vegetables;
c) freezing the washed and dried vegetables rapidly and individually;
d) maintaining the vegetables thus frozen in this state;
e) exerting on them sufficient mechanical stresses to allow them to be broken into a plurality of fractions, especially the leaves and the stalks;
f) sorting them in order to separate the uniform fractions from one another;
g) packaging at least one of the fractions in the frozen state, namely the fractions to be used, especially the leaves;
h) disposing of the sorted fraction or fractions intended not to be used, namely the stalks; this process being specially designed for the preparation of aromatic herbs or plants.

17. The process as claimed in claim 16, wherein a rapid individual freezing of the order of -18°C to -40°C is carried out.

18. The process as claimed in claim 16, wherein mechanical stresses are exerted by beating, crushing, pounding or the like.

19. The process as claimed in claim 16, wherein a granulometric, densimetric, pneumatic or calorimetric sorting or a sorting according to the actual shape of the sorted fraction is carried out.

20. The process as claimed in claim 16, wherein the work is carried out continuously.

21. The process as claimed in claim 16, wherein the work is carried out intermittently in batches.

22. The process as claimed in claim 16, wherein the exertion of the mechanical stresses and the sorting are carried out in a plurality of steps or pairs of steps.

23. A process for the treatment of vegetables, of the type in which the vegetables are first frozen and then broken in the frozen state, defined in that it comprises the successive steps involving:
a) freezing the vegetables rapidly and individually;
b) maintaining the vegetables thus frozen in this state;
c) exerting on them sufficient mechanical stresses to allow them to be broken into a plurality of fractions, especially the leaves and stalks;
this process being specially designed for the treatment of aromatic herbs or plants.
